# EUROPÄISCHE PATENTSCHRIFT

(11) **EP 3 220 250 B1**
(45) Veröffentlichungstag und Bekanntmachung des Hinweises auf die Patenterteilung: **09.10.2019**
(21) Anmeldenummer: 17161540.4
(22) Anmeldetag: 19.08.2010
(51) Int. Cl.: G06F 3/0485, B60K 35/00, G06F 3/048, G06F 3/0482, H04N 21/41, H04N 21/414, B60K 37/06, H04N 21/81, H04N 21/482

(54) **BEDIENVORRICHTUNG UND VERFAHREN ZUM BEREITSTELLEN EINER BEDIENVORRICHTUNG**
CONTROL DEVICE AND METHOD FOR PROVIDING A CONTROL DEVICE
DISPOSITIF DE COMMANDE ET PROCÉDÉ DE MISE À DISPOSITION D'UN DISPOSITIF DE COMMANDE

(30) Priorität: 04.09.2009 DE 102009040254
(43) Veröffentlichungstag der Anmeldung: 20.09.2017
(62) Teilanmeldung aus: 10008671.9
(73) Patentinhaber: VOLKSWAGEN AKTIENGESELLSCHAFT, 38440 Wolfsburg (DE)
(72) Erfinder: GEIßLER, Jens, 38104 Braunschweig (DE); BURGHOFF, Christian, 38106 Braunschweig (DE); HENTSCHEL, Jenika, 38239 Salzgitter (DE); MISSALL, Markus, 38102 Braunschweig (DE); GROTE, Gerald, 38118 Braunschweig (DE); KUHN, Mathias, 14129 Berlin (DE)
(74) Vertreter: Reitstötter Kinzebach

(56) Entgegenhaltungen:
- DE-A1-102007 018 076
- DE-A1-102007 039 442
- DE-U1-202009 001 077

## Beschreibung

Die vorliegende Erfindung betrifft ein Verfahren zum Bereitstellen einer Bedienvorrichtung, bei dem mittels der Betätigung einer Eingabeeinrichtung eine Informationsanzeige auf einer Anzeigefläche gesteuert wird, wobei die anzeigbaren Informationen zumindest zwei Listen mit jeweils mehreren Listeneinträgen umfassen. Ferner betrifft die Erfindung eine Bedienvorrichtung mit einer Anzeigefläche zur Anzeige von Informationen, wobei die anzeigbaren Informationen zumindest zwei Listen mit jeweils mehreren Listeneinträgen umfassen, einer Steuervorrichtung zum Erzeugen von Graphikdaten für die Anzeige auf der Anzeigefläche und einer Eingabeeinrichtung zum Steuern der Informationsanzeige auf der Anzeigefläche, wobei auf einen zweiten mittels der Eingabeeinrichtung ausführbaren Betätigungsvorgang während der Anzeige des Anzeigeinhalts, der einem ausgewählten Listeneintrag der ersten Liste zugeordnet ist, die Steuervorrichtung der Anzeigefläche so ansteuert, dass zu einer Anzeige des Anzeigeinhalts, der einem Listeneintrag der zweiten Liste zugeordnet ist, gewechselt wird.

Die Bedienvorrichtung ist insbesondere Teil eines Fahrzeugs. Sie kann jedoch auch in Verbindung mit anderen Geräten, insbesondere tragbaren Geräten, wie einem Musikspieler, einem Mobiltelefon oder einem mobilen Navigationssystem eingesetzt werden.

Mit der Zunahme elektronischer Einrichtungen im Fahrzeug wurde es erforderlich, eine größere Informationsmenge im Fahrzeug darzustellen. Moderne Fahrzeuge umfassen beispielsweise neben einer Multifunktionsanzeige eine Vielzahl von Fahrerassistenzsystemen, deren Informationen im Fahrzeug angezeigt werden müssen. Des Weiteren umfassen Fahrzeuge häufig ein Navigationssystem. Mittels eines solchen Navigationssystems können digitale geographische Straßenkarten mit einer Route und gegebenenfalls vielfältigen Zusatzinformationen angezeigt werden. Schließlich umfassen moderne Fahrzeuge vielfach Kommunikations- und Multimediaanwendungen, einschließlich einer Mobiltelefonschnittstelle und Einrichtungen zur Wiedergabe von Musik und Sprache. Auch für diese Anwendungen muss in dem Fahrzeug die Möglichkeit bestehen, Informationen anzuzeigen.

Um die vielfältigen Informationen flexibel anzeigen zu können, werden z. B. frei programmierbare Displays eingesetzt, die häufig auch die Wiedergabe herkömmlicher mechanischer Instrumente übernehmen. In der DE 10 2006 032 118 A1 ist beispielsweise ein Kombiinstrument für ein Kraftfahrzeug beschrieben, welches ein Display umfasst, mit dem variabel die Geschwindigkeit des Kraftfahrzeugs, die Drehzahl des Motors des Kraftfahrzeugs, die Temperatur des Motors des Kraftfahrzeugs, die Tankfüllung und/oder die Zeit angezeigt werden können. Außerdem ist es möglich, Informationen eines Navigationssystems, eines Telefons, einer Musikanlage, eines Infotainmentsystems und/oder einer Klimaanlage anzuzeigen.

Zusätzlich zu dem Kombiinstrument wird vielfach eine Anzeigevorrichtung oberhalb der Mittelkonsole des Fahrzeugs angeordnet, über welche weitere Informationen angezeigt werden können. Diese Anzeigevorrichtung wird insbesondere als Multifunktionsanzeige und zur Darstellung einer geographischen Karte eines Navigationssystems verwendet. Eine solche Multifunktionsanzeige ist beispielsweise in der DE 199 41 956 A1 beschrieben.

Damit der Nutzer die auf einer Anzeigefläche dargestellte Information so schnell und intuitiv wie möglich erfassen kann und um ihm außerdem eine schnelle, intuitive und einfache Bedienung von Einrichtungen zu ermöglichen, deren Informationen dargestellt werden, ist aus der WO 2009/024474 A1 ein Verfahren zum Anzeigen von Informationen bekannt, bei dem ein flächiges Objekt auf einem Display graphisch dargestellt wird, wobei das graphische Objekt ein Anzeigefeld und ein Bedienfeld umfasst. Das Anzeigefeld wird auf einer Seite des flächigen graphischen Objekts und das Bedienfeld auf der anderen Seite des flächigen graphischen Objekts dargestellt. Auf eine Eingabe mittels einer Eingabeeinrichtung werden die Graphikdaten zur Anzeige auf dem Display so verändert, dass sich das graphische Objekt bei einer perspektivischen Darstellung auf dem Display von einer Seite zu der anderen Seite dreht.

Des Weiteren ist aus der WO 2009/024400 A1 ein Verfahren zum Anzeigen von Informationen bekannt, bei dem graphische Objekte, welche auf einer Anzeigefläche angezeigt werden, auf einem virtuellen, perspektivisch dargestellten Ring angeordnet dargestellt werden, wobei auf eine Eingabe mittels einer Eingabeeinrichtung eine Recheneinheit einer Benutzerschnittstelleneinrichtung die Graphikdaten für die Anzeige auf der Anzeigefläche so verändert, dass sich die Objekte auf dem virtuellen Ring karussellartig drehen. Dabei wird insbesondere mittels der Eingabeeinrichtung eine Linie auf der Anzeigefläche eingegeben und der Winkel, um den die Objekte gedreht werden, steht in einer direkten Beziehung zu der eingegebenen Länge auf der Anzeigefläche.

Aus der DE 10 2007 018 076 A1 ist weiterhin ein Verfahren bekannt zum Auswählen eines Listeneintrags aus einer Liste mit mehreren Listeneinträgen mittels eines Bedienelements und einer Anzeigeeinrichtung zum Anzeigen von den Betrieb eines Fahrzeugs betreffenden Informationen, wobei den Listeneinträgen jeweils Zusatzinformation zugeordnet sind. Dabei wird durch eine Betätigung des Bedienelements ein bestimmter Listeneintrag in einen Zustand gebracht, in dem er gegenüber zumindest einem anderen Listeneintrag hervorgehoben dargestellt wird. Ferner wird der hervorgehobene Listeneintrag automatisch ausgewählt, wenn das Bedienelement für ein definiertes Zeitintervall nicht betätigt wurde.

Schließlich offenbart die DE 10 2007 039 442 A1 ein Verfahren zum Anzeigen von Informationen in einem Kraftfahrzeug, bei dem mehrere Objekte mittels eines in einem Kraftfahrzeug befestigten Displays grafisch dargestellt werden. Dabei werden von einer Benutzerschnittstelleneinrichtung Grafikdaten erzeugt, die das Display so ansteuern, dass die grafischen Objekte auf einem virtuellen, perspektivisch dargestellten Ring angeordnet dargestellt werden und dass auf eine Eingabe mittels einer Eingabeeinrichtung eine Recheneinheit der Benutzerschnittstelleneinrichtung die Grafikdaten so verändert, dass sich die grafischen Objekte auf dem virtuellen Ring karussellartig drehen.

Für die Anzeige von Information in einem Fahrzeug ergeben sich sehr spezielle Anforderungen. Die Informationsaufnahme erfolgt im Fahrzeug unter anderem durch den Fahrer. Die Informationen sollten somit im Fahrzeug so dargestellt werden, dass die Informationsaufnahme durch den Fahrer nicht zu einer Ablenkung während der Fahrt führt. Die dargestellten Informationen sollten daher intuitiv und schnell vom Fahrer erfassbar sein, so dass er für die Informationsaufnahme nur sehr kurzzeitig den Blick vom Fahrgeschehen abwenden muss. Wird die Bedienung der Fahrzeugeinrichtungen von einer Anzeige unterstützt oder geführt, sollte die Anzeige so erfolgen, dass der Fahrer für die Bedienung nur sehr kurz die Anzeige betrachten muss, um die Bedienung durchzuführen.

Auch bei der Anzeige von Informationen in mobilen Geräten sollte die Information schnell und intuitiv erfasst werden können. Der Nutzer des mobilen Geräts nimmt nämlich die angezeigte Information häufig auf, während er andere Tätigkeiten ausführt. Dabei ergibt sich auch das Problem, dass die Anzeigefläche eines mobilen Geräts vielfach relativ klein ist, so dass es besonders wichtig ist, dass die dargestellten Informationen leicht erfassbar und ein Wechsel des Informationsinhalts leicht nachvollziehbar ist.

Der vorliegenden Erfindung liegt die Aufgabe zugrunde ein Verfahren und eine Bedienvorrichtung der eingangs genannten Art bereitzustellen, mit denen die angezeigten Informationen so schnell und intuitiv wie möglich erfassbar sind. Außerdem soll der Betrachter auch einen Wechsel des Anzeigeinhalts einfach und intuitiv nachvollziehen können.

Erfindungsgemäß wird diese Aufgabe durch ein Verfahren mit den Merkmalen des Anspruchs 1 und eine Bedienvorrichtung mit den Merkmalen des Anspruchs 8 gelöst. Vorteilhafte Aus- und Weiterbildungen ergeben sich aus den abhängigen Ansprüchen. Beschriebene Ausführungsarten, die nicht in den Schutzumfang der Ansprüche fallen, sind nicht Teil der beanspruchten Erfindung.

Das erfindungsgemäße Verfahren ist dadurch gekennzeichnet, dass durch einen ersten Betätigungsvorgang während der Anzeige des Anzeigeinhalts, der einem ausgewählten Listeneintrag der ersten Liste zugeordnet ist, zumindest eine Teilmenge der ersten Liste angezeigt wird und durch einen zweiten Betätigungsvorgang während der Anzeige des Anzeigeinhalts, der einem ausgewählten Listeneintrag der ersten Liste zugeordnet ist, zu einer Anzeige eines Anzeigeinhalts, der einem Listeneintrag der zweiten Liste zugeordnet ist, gewechselt wird.

Unter einer *Liste* wird im Sinne der Erfindung ein Datenbestand verstanden, der in eine Vielzahl von Dateneinheiten einteilbar ist. Die Dateneinheiten entsprechen dann den Listeneinträgen.

Die Dateneinheiten können in eine bestimmte Reihenfolge gebracht werden, so dass sie dann eine Listendarstellung bilden. Die Liste kann beispielsweise eine Vielzahl von Audio- oder Videodateien umfassen. Ferner kann sie Einträge eines Telefon- oder Adressbuchs, Einträge zu einem Menü einer hierarchischen Menüstruktur zur Bedienung einer Einrichtung oder andere Dateneinheiten betreffen, die sich in einer Liste zusammenfassen und abstrakt an Hand eines grafischen Objekts darstellen lassen.

Durch die beiden Betätigungsvorgänge des erfindungsgemäßen Verfahrens kann der Nutzer besonders einfach und intuitiv innerhalb der anzeigbaren Informationen navigieren. Er kann einfach zwischen Kontexten verschiedener Listen und innerhalb der Listeneinträge einer Liste wechseln.

Gemäß einer Ausgestaltung des erfindungsgemäßen Verfahrens wird durch den zweiten Betätigungsvorgang während der Anzeige des Anzeigeinhalts, der einem ausgewählten Listeneintrag der ersten Liste zugeordnet ist, zunächst zu einer Darstellung eines ersten graphischen Objekts, welches der ersten Liste zugeordnet ist, auf einem virtuellen, perspektivisch dargestellten Ring mit den mehreren Objekten gewechselt, danach der Ring gedreht, bis ein zweites graphisches Objekt, das der zweiten Liste zugeordnet ist, im Vordergrund angezeigt wird und schließlich wird zu der Anzeige des Anzeigeinhalts gewechselt, der dem Listeneintrag der zweiten Liste zugeordnet ist. Dieser Übergang der Anzeige wird insbesondere in einer automatisch ablaufenden Animation angezeigt, für die eine weitere Betätigung durch den Nutzer nicht mehr erforderlich ist. Durch die Darstellung des Übergangs kann der Nutzer den Wechsel in der Anzeige von einem Listeneintrag einer Liste zu dem Listeneintrag einer anderen Liste besonders gut nachvollziehen, so dass ihm die Orientierung innerhalb der in Listen organisierten Informationsstruktur erleichtert wird.

Bei dem erfindungsgemäßen Verfahren kann der Nutzer durch mehrmaliges Ausführen des ersten Betätigungsvorgangs einen Listeneintrag der ersten Liste markieren und/oder auswählen. Er kann beispielsweise durch den ersten Betätigungsvorgang einen Bildlauf (Scrollen) in der ersten Liste erzeugen.

Des Weiteren kann durch den zweiten Betätigungsvorgang festgelegt werden, in welchem Drehsinn der Ring gedreht wird. Der Ring enthält mehrere Objekte. Durch mehrmaliges Ausführen des zweiten Betätigungsvorgangs wird insbesondere eines der Objekte des Rings ausgewählt. Bei dem Übergang der Anzeige für den Listeneintrag einer Liste zu dem Listeneintrag einer anderen Liste wird der Ring insbesondere perspektivisch um eine vertikale Achse gedreht.

Die erfindungsgemäße Bedienvorrichtung ist dadurch gekennzeichnet, dass auf einem ersten mittels der Eingabeeinrichtung ausführbaren Betätigungsvorgang während der Anzeige des Anzeigeinhalts, der einem ausgewählten Listeneintrag der ersten Liste zugeordnet ist, die Steuervorrichtung die Anzeigefläche so ansteuert, dass zumindest eine Teilmenge der ersten Liste angezeigt wird.

Insbesondere der vorstehend beschriebene Übergang zwischen der Darstellung eines Listeneintrags der ersten Liste zu der Darstellung eines Listeneintrags der zweiten Liste mittels der Darstellung der Objekte, welche auf einem virtuellen, perspektivisch dargestellten Ring dargestellt werden, ist mittels der Steuervorrichtung der erfindungsgemäßen Bedienvorrichtung ausführbar.

Die Eingabeeinrichtung der erfindungsgemäßen Bedienvorrichtung ist insbesondere von der Anzeigefläche abgesetzt angeordnet. Sie weist beispielsweise für den ersten Betätigungsvorgang einen ersten Wippschalter und/oder für den zweiten Betätigungsvorgang einen zweiten Wippschalter auf. Bevorzugt weist die Eingabeeinrichtung für den ersten und den zweiten Betätigungsvorgang einen Kreuzwippschalter auf. Ferner weist die Eingabeeinrichtung insbesondere für den ersten Betätigungsvorgang zumindest einen ersten Tastschalter, bevorzugt zwei Tastschalter, und/oder für den zweiten Betätigungsvorgang zumindest einen zweiten Tastschalter, bevorzugt zwei Tastschalter, auf. Diese Tastschalter können von dem Kreuzwippschalter bereitgestellt werden.

Des Weiteren betrifft die Erfindung ein Fahrzeug mit der erfindungsgemäßen Bedienvorrichtung. In diesem Fall ist die Eingabeeinrichtung insbesondere am Lenkrad des Fahrzeugs angeordnet oder von einer am Lenkrad befindlichen Hand eines Nutzers aus bedienbar.

Die Erfindung wird nun anhand eines Ausführungsbeispiels mit Bezug zu den Zeichnungen erläutert.
Figur 1 zeigt schematisch ein Ausführungsbeispiel der erfindungsgemäßen Bedienvorrichtung und die Verbindung dieser Bedienvorrichtung mit anderen Einrichtungen und
die Figur 2 bis 22 zeigen Anzeigen auf der Anzeigefläche, die von einem Ausführungsbeispiel des erfindungsgemäßen Verfahrens erzeugt werden.

Das im Folgenden beschriebene Ausführungsbeispiel betrifft den Einsatz der Bedienvorrichtung und des Verfahrens in einem Fahrzeug, insbesondere einem Kraftfahrzeug. Mittels Bedienvorrichtung und durch das Verfahren können den Fahrzeuginsassen Informationen angezeigt werden. Ferner können die Fahrzeuginsassen mittels der Bedienvorrichtung Einrichtungen des Fahrzeugs bedienen und die Anzeige steuern. Es wird jedoch darauf hingewiesen, dass die Bedienvorrichtung und das Verfahren auf gleiche Weise auch in anderen Geräten, wie zum Beispiel mobilen Geräten, eingesetzt werden können.

Die Bedienvorrichtung umfasst eine Anzeigefläche 1, die so im Innenraum des Fahrzeugs angeordnet ist, dass sie für zumindest einen Fahrzeuginsassen, insbesondere den Fahrer, gut sichtbar ist. Die Anzeigefläche 1 kann von einem Display, insbesondere einem Flüssigkristalldisplay, beliebiger Bauart bereitgestellt werden.

Die Anzeigefläche 1 ist mit einer Steuervorrichtung 2 verbunden, mit welcher Grafikdaten zur Informationsdarstellung auf der Anzeigefläche 1 erzeugbar sind, so dass eine Anzeigevorrichtung gebildet wird. Die Anzeigefläche 1 ist im hier beschriebenen Ausführungsbeispiel in drei Anzeigebereiche 5, 6 und 9 unterteilt. In den Anzeigebereichen 5 und 6 werden Statusinformationen angezeigt. Im mittleren Bereich 9 werden Informationen zu einem aktiven Kontext wiedergegeben, wie es später erläutert wird.

Ferner ist die Steuervorrichtung 2 mit einer Eingabeeinrichtung 4 verbunden, über welche der Benutzer Einrichtungen des Fahrzeugs, deren Informationen auf der Anzeigefläche 1 angezeigt werden, steuern kann. Ferner kann mittels der Eingabeeinrichtung 4 die Informationsanzeige auf der Anzeigefläche 1 gesteuert werden.

Die Eingabeeinrichtung 4 ist von der Anzeigefläche 1 abgesetzt im Fahrzeug angeordnet. Sie ist insbesondere in das Lenkrad des Fahrzeugs integriert. Ferner kann sie so in der Nähe des Lenkrads des Fahrzeugs angeordnet sein, dass sie von einer am Lenkrad befindlichen Hand eines Nutzers aus bedienbar ist.

Die Eingabeeinrichtung 4 umfasst insbesondere ein mechanisches Betätigungselement, nämlich einen Kreuzwippschalter 10. Der Kreuzwippschalter 10 zeichnet sich dadurch aus, dass er auf zwei senkrecht zueinander stehenden Achsen jeweils einen Wippschalter umfasst, der wiederum auf jeder Seite der Wippe Tastschalter aufweist. Der senkrechte Wippschalter des Kreuzwippschalters 10 umfasst einen oberen Druckpunkt 13 und einen unteren Druckpunkt 14. Der horizontale Wippschalter des Kreuzwippschalters 10 umfasst einen linken Druckpunkt 11 und einen rechten Druckpunkt 12. Das einmalige Drücken auf einen der Druckpunkte 11 bis 15 betätigt somit einen Tastschalter des Kreuzwippschalters 10. Ein solches einmaliges Drücken wird als Betätigungsvorgang aufgefasst. Des Weiteren kann der Kreuzwippschalter 10 noch einen mittleren Druckpunkt 15 aufweisen. Wenn der Nutzer auf diesen mittleren Druckpunkt 15 drückt, wird der Kreuzwippschalter 10 insgesamt hereingedrückt. Der Kreuzwippschalter 10 umfasst somit insgesamt fünf Tastschalter. Mittels der Eingabeeinrichtung 4 kann die Anzeige auf der Anzeigefläche 1 gesteuert werden, wie es später erläutert wird.

Die Steuervorrichtung 2 ist ferner mit einer Systemuhr 8 und mit einem Fahrzeugbus 7 über eine Schnittstelle gekoppelt. Über den Fahrzeugbus 7 ist die Steuervorrichtung 2 mit Fahrerassistenzsystemen des Fahrzeugs verbunden. Die Steuervorrichtung 2 erhält über den Fahrzeugbus 7 Daten dieser Fahrerassistenzsysteme und bereitet die so auf, dass diese Daten dem Fahrer bzw. den Fahrzeuginsassen über die Anzeigefläche 1 grafisch dargestellt werden. Die Steuervorrichtung 2 erzeugt hierfür Grafikdaten für auf der Anzeigefläche 1 darstellbare Objekte, welche unter anderem die Informationen der Fahrerassistenzsysteme grafisch darstellen. Ferner ist die Steuervorrichtung 2 über den Fahrzeugbus 7 mit verschiedenen Informations- und Kommunikations- sowie Unterhaltungseinrichtungen und verschiedenen Steuergeräten des Fahrzeugs verbunden. Die vielfältigen Informationen dieser Einrichtungen des Fahrzeugs werden in der Steuervorrichtung 2 aufbereitet und in Grafikdaten für eine grafische Darstellung umgewandelt. Für Animationen der grafischen Darstellung auf der Anzeigefläche umfasst die Steuervorrichtung eine Recheneinheit 3, welche beim Erzeugen von Zwischenbildern auf die Systemuhr 8 zurückgreift.

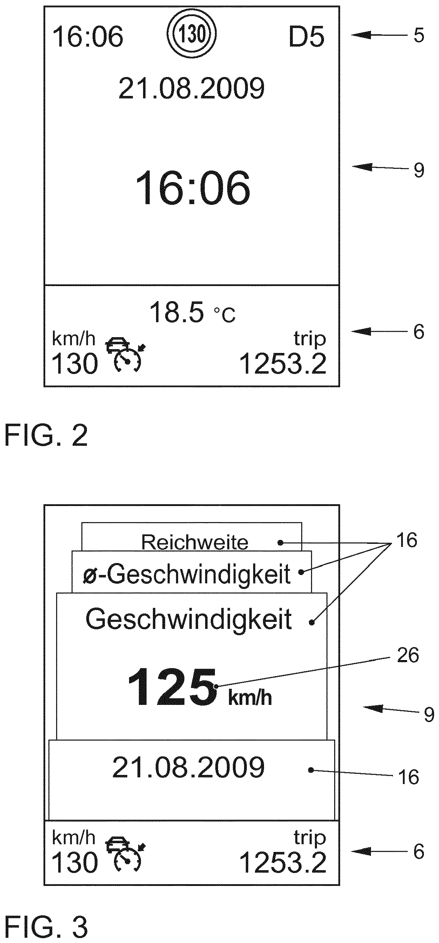

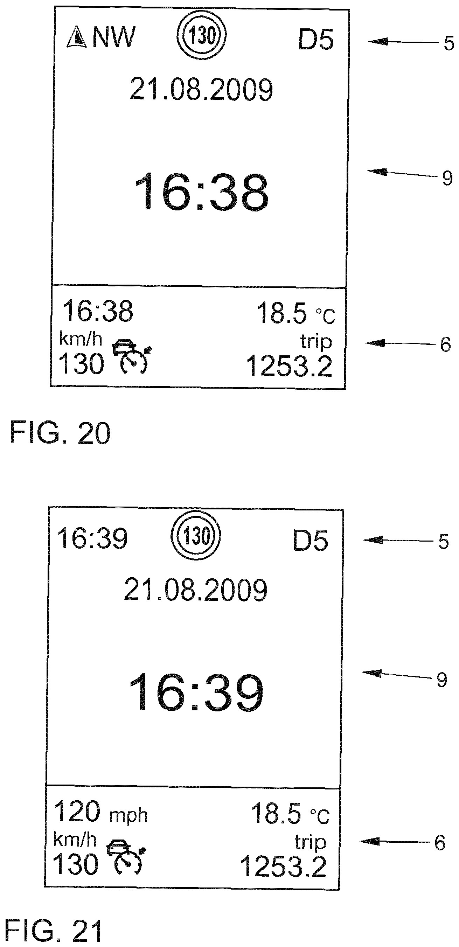

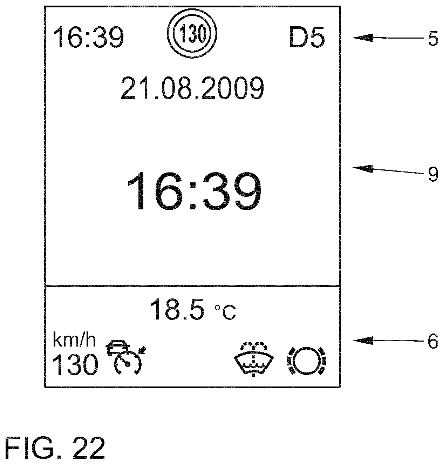

Im Folgenden wird ein Ausführungsbeispiel des erfindungsgemäßen Verfahrens, welches von der vorstehend beschriebenen Bedienvorrichtung ausführbar ist, mit Bezug zu den Figuren 2 bis 22 im Detail erläutert:
Ausgangspunkt für die im Folgenden beschriebenen Anzeigen auf der Anzeigefläche 1 ist die in Fig. 2 wiedergegebene Darstellung. Im Anzeigebereich 5 wird die aktuelle Uhrzeit und der aktuelle Gang des Getriebes des Fahrzeugs angezeigt. Des Weiteren kann optional ein von einem Fahrerassistenzsystem erfasstes Verkehrszeichen dargestellt werden. In dem in Fig. 2 gezeigten Fall wird das Verkehrszeichen für eine Geschwindigkeitsbegrenzung wiedergegeben.

Der Anzeigebereich 6 ist bei dem vorliegenden Ausführungsbeispiel durch eine horizontale Linie von dem Bereich 9 nach oben abgegrenzt. In diesem Bereich 6 wird bei der in Fig. 2 wiedergegebenen Anzeige die aktuelle Außentemperatur, die aktuelle Fahrzeuggeschwindigkeit und der Tageskilometerzähler angezeigt. Ferner können Hinweise von Fahrerassistenzsystemen in diesem Bereich 6 angezeigt werden.

Die Statusanzeigen in den Anzeigenbereichen 5 und 6 werden von der Steuervorrichtung 2 so angesteuert, dass die aktuelle Ganganzeige und die Temperaturanzeige immer sichtbar sind.

Der Anzeigebereich 9 umfasst in dem in Fig. 2 gezeigten Fall nur die aktuelle Uhrzeit und das aktuelle Datum. Der Anzeigeinhalt, welcher in dem Bereich 9 wiedergegeben wird, ist einem ausgewählten Listeneintrag einer ersten Liste zugeordnet. Um zum Anzeigeinhalt weiterer Listeneinträge dieser ersten Liste zugelangen, kann der Nutzer einen Betätigungsvorgang mittels der Eingabeeinrichtung 4 ausführen. Um zu dem Anzeigeinhalt des vorhergehenden Listeneintrags zu gelangen, drückt der Nutzer auf den Druckpunkt 13 des Kreuzwippschalters 10; um zu dem Anzeigeinhalt eines nachfolgenden Listeneintrags der ersten Liste zu gelangen, drückt der Nutzer den Druckpunkt 14 des Kreuzwippschalters 10.

Wenn der Nutzer beispielsweise auf den Druckpunkt 13 des Kreuzwippschalters 10 drückt und hierdurch den diesem Druckpunkt 13 zugeordneten Tastschalter betätigt, wechselt die Anzeige auf der Anzeigefläche 1 von der in Fig. 2 wiedergegebenen Darstellung zu der in Fig. 3 wiedergegebenen Darstellung. Wie aus Fig. 3 ersichtlich, verschwindet der Anzeigebereich 5. Ferner wird der Anzeigebereich 6 kleiner dargestellt. Der Anzeigebereich 6 enthält nicht mehr die Temperaturanzeige und die horizontale Linie, welche den Anzeigebereich 6 von dem Anzeigebereich 9 abgrenzt, ist nach unten verschoben. Der Anzeigebereich 9 wird hingegen größer dargestellt.

Im Anzeigebereich 9 werden nun die Listeneinträge 16 der ersten Liste angezeigt. In dem in Fig. 3 wiedergegebenen Beispiel werden als Teilmenge der ersten Liste insgesamt vier Listeneinträge 16 mittels eines flächigen, kartenartigen Anzeigeobjekt dargestellt. Bei einer anderen Ausgestaltung werden nur zwei oder drei Listeneinträge 16 dargestellt. Die Listeneinträge 16 geben im Wesentlichen bereits den Anzeigeinhalt wieder, welcher dem jeweiligen Listeneintrag 16 zugeordnet ist. Bei der perspektivischen Darstellung der Listeneinträge 16 ist jedoch nur ein Teil dieses Anzeigeinhalts sichtbar. Bestimmte Bereiche sind von perspektivisch weiter vorne dargestellten Listeneinträgen verdeckt bzw. sind nicht mehr im Anzeigebereich 9 enthalten. Der Anzeigeinhalt des Listeneintrags 16 der in Fig. 2 wiedergegeben wurde, ist nach der Betätigung des Tastschalters mit dem Druckpunkt 13 bei der Darstellung in Fig. 3 als unterster Listeneintrag so dargestellt, dass nur noch die Datumsangabe sichtbar ist. Die weiteren Listeneinträge 16 sind perspektivisch so angeordnet, dass sie auf einer perspektivisch nach hinten gehenden Kurve angeordnet sind. Bei dem Listeneintrag 16 der hinter dem Listeneintrag 16 mit der Datumsangabe angeordnet ist, und welchem als Anzeigeinhalt die aktuelle Fahrzeuggeschwindigkeit zugeordnet ist, ist das Wort "Geschwindigkeit" sowie die Wiedergabe der aktuellen Geschwindigkeit erkennbar. Die aktuelle Geschwindigkeit bei der Anzeige des Listeneintrags 16 ist dabei farblich hervorgehoben dargestellt; sie ist das Informationselement 26 des Listeneintrags 16. Die Angabe "125 km/h" ist insbesondere in einer Signalfarbe, z. B. in Rot, dargestellt. Die perspektivisch weiter hinten liegenden Listeneinträge 16 sind nur noch anhand der Hauptbegriffe für die Durchschnittsgeschwindigkeit und die Reichweite identifizierbar.

Durch Betätigung der Druckpunkte 13 bzw. 14 des Kreuzwippschalters 10 kann der Nutzer einen Bildlauf (Scrollen) in der ersten Liste erzeugen. Aufeinander folgend gelangt der Nutzer auf diese Weise zu folgenden Listeneinträgen 16: dem Listeneintrag mit der Datumsangabe und der Uhrzeit, wobei die Uhrzeit farblich hervorgehoben dargestellt wird; dem Listeneintrag für die Fahrzeuggeschwindigkeit, wobei die aktuelle Fahrzeuggeschwindigkeit farblich hervorgehoben dargestellt ist; dem Listeneintrag für die Durchschnittsgeschwindigkeit, wobei die aktuelle Durchschnittsgeschwindigkeit farblich hervorgehoben dargestellt ist; dem Listeneintrag für die verbleibende Reichweite, wobei die verbleibende Reichweite in Kilometern farblich hervorgehoben dargestellt ist; dem Listeneintrag für den Durchschnittsverbrauch, wobei der aktuelle Durchschnittsverbrauch in l/100 km, farblich hervorgehoben dargestellt ist; dem Listeneintrag für den aktuellen Verbrauch, wobei der aktuelle Verbrauch in l/100 km farblich hervorgehoben dargestellt ist; dem Listeneintrag für Verkehrszeichen, die von einem Fahrerassistenzsystem erfasst worden sind.

Während des Bildlaufs durch die Listeneinträge 16 der ersten Liste werden die Listeneinträge 16 perspektivisch von oben hinten nach unten vorne oder von unten vorne nach oben hinten gedreht werden. Bei der einmaligen Betätigung des Druckpunkts 13 bzw. 14 rückt die Liste dabei um einen Listeneintrag 16 weiter. Diese Veränderung der Teilmenge der Listeneinträge 16 der ersten Liste erfolgt jedoch nicht sprunghaft, sondern in einer Bildfolge (Animation), bei der mehrere interpolierte Zwischenbilder angezeigt werden. Die Animation zeichnet sich dabei dadurch aus, dass die perspektivisch dargestellte Bewegung zu Beginn eine Beschleunigung aufweist und am Ende abgebremst wird.

Im Folgenden wird im Detail erläutert, wie die Listeneinträge 16 der ersten Liste bei einem Bildlauf bewegt werden:
Bei dem Bildlauf durch die Liste wird die Teilmenge der angezeigten Listeneinträge 16 so verändert, dass Listeneinträge 16 verschwinden und stattdessen neue Listeneinträge angezeigt werden. Während des Bildlaufs wird dabei die Position, die Größe und die Transparenz der angezeigten Listeneinträge verändert. Dabei wird ein Listeneintrag 16 zu der vorherigen Position eines benachbarten Listeneintrags bewegt, wobei er bei dieser Bewegung zunächst beschleunigt bewegt wird und danach abgebremst bewegt wird. Der Bildlauf setzt sich somit aus Bildfolgen zusammen, bei denen ein Listeneintrag 16 jeweils um eine Position weiterbewegt wird. Wenn ein Listeneintrag 16 bei der letzten angezeigten Position ist, verschwindet er bei der nächsten Bildfolge. Gleichzeitig taucht auf der anderen Seite der Liste ein neuer Listeneintrag 16 auf.

Die Länge des Zeitintervalls, welches ein Listeneintrag 16 benötigt, um zu der vorherigen Position eines benachbarten Listeneintrags zu gelangen, liegt in einem Bereich von 100 ms bis 600 ms, insbesondere in einem Bereich von 300 ms bis 500 ms, bevorzugt ist sie 400 ms. Die Zwischenbilder für die Bildfolge zwischen zwei Positionen für einen Listeneintrag 16 werden von der Recheneinheit 3 der Steuervorrichtung 2 durch Interpolation berechnet.

Die Position und die Größe der angezeigten Listeneinträge 16 wird bei dem Bildlauf so verändert, dass eine perspektivisch wiedergegebene Bildfolge angezeigt wird, bei der sich in einer Bildlaufrichtung der Listeneinträge 16 von einer Seite der Anzeigefläche 1, zum Beispiel der unteren Seite, von vorne zur anderen Seite der Anzeigefläche 1, zum Beispiel der oberen Seite, nach hinten bewegen und in der anderen Bildlaufrichtung umgekehrt von der anderen Seite der Anzeigefläche 1, d.h. der oberen Seite, von hinten zu der einen Seite der Anzeigefläche 1, d.h. der unteren Seite, nach vorne bewegen. Wie bei der perspektivischen Darstellung üblich, werden dabei hintere Listeneinträge 16 kleiner als perspektivisch vordere Listeneinträge 16 angezeigt.

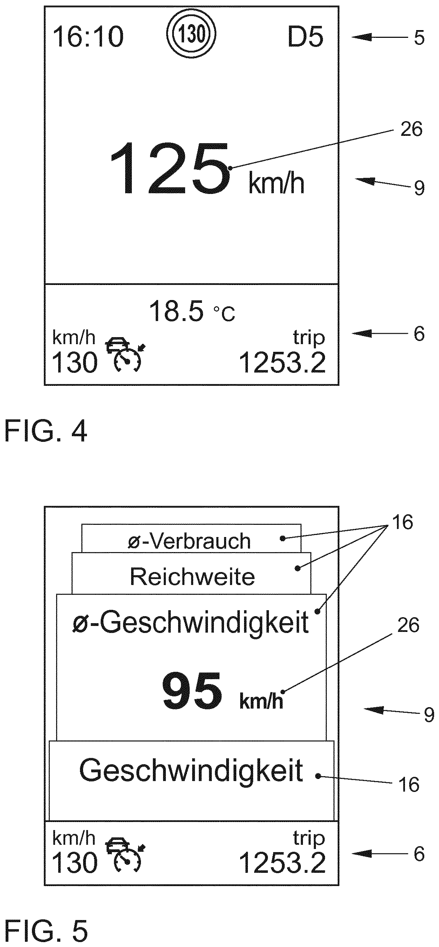

Wie aus Figur 3 und 5 ersichtlich, können die Listeneinträge 16 als Karten dargestellt werden. Die Karten werden jedoch so wiedergegeben, dass die Normale der Karte bei der perspektivisch wiedergegebenen Bildfolge senkrecht zur Anzeigefläche 1 ausgerichtet ist. Der Betrachter schaut somit immer senkrecht auf die Karte des Listeneintrags 16. Perspektivische Verzerrungen des Anzeigeinhalts des Listeneintrags 16 werden nicht erzeugt, damit der Anzeigeinhalt des Listeneintrags 16 auch während des Bildlaufs gut ablesbar bleibt.

Bei der perspektivisch wiedergegebenen Bildfolge werden die Listeneinträge 16 beispielsweise um eine außerhalb der Anzeigefläche 1 liegende Achse geschwenkt, wobei bei der Schwenkbewegung die Listeneinträge 16 selbst nicht gedreht werden. Gemäß einem anderen Beispiel kann sich die Bewegung der Listeneinträge 16 bei der Bildfolge aus einer Überlagerung einer Schwenkbewegung um eine außerhalb der Anzeigefläche 1 liegende Achse und einer senkrecht zur Anzeigefläche 1 gerichteten Translationsbewegung ergeben, wobei auch in diesem Fall bei der Schwenkbewegung die Listeneinträge 16 selbst nicht gedreht werden.

Die Transparenz der Listeneinträge 16 bzw. die Transparenz der Darstellung des Anzeigeinhalts der Listeneinträge 16 wird während des Bildlaufs so verändert, dass perspektivisch hintere Listeneinträge transparenter als perspektivisch vordere Listeneinträge 16 angezeigt werden.

Im Folgenden werden zwei Beispiele für die Positionen der Listeneinträge 16 auf der Anzeigefläche 1 gegeben. Die Bildfolge wird zwischen diesen Positionen animiert:
Jedem Listeneintrag 16 wird eine bestimmte Position auf der Anzeigefläche 1 zugeordnet. Hierfür wird im Anzeigebereich 9, in welchem die Listeneinträge 16 dargestellt werden, ein Koordinatensystem definiert, dessen Nullpunkt in der linken unteren Ecke des Anzeigebereichs 9 ist. Die x-Achse des Koordinatensystems erstreckt sich nach rechts, wobei dem rechten Rand des Anzeigebereichs 9 der Wert 1 zugeordnet wird. Die y-Achse des Koordinatensystems erstreckt sich senkrecht zur x-Achse nach oben, wobei dem oberen Rand des Anzeigebereichs 9 auch der Wert 1 zugeordnet wird. Die Position eines Listeneintrags 16 wird durch die x-y-Koordinaten des Mittelpunkts des Listeneintrags 16 angegeben.

Die x- und y-Werte geben somit relative Positionen des Anzeigebereichs 9 an. Die absoluten Positionen können dann in Abhängigkeit von der tatsächlichen Größe des Anzeigebereichs 9 berechnet werden.

Ferner wird jedem Listeneintrag 16 eine Größe bzw. eine Skalierung zugeordnet, wobei dem Listeneintrag in der markierten Position die Größe 1 zugeordnet wird. Schließlich wird jedem Listeneintrag 16 eine Transparenz zugeordnet, wobei auch in diesem Fall dem markierten Listeneintrag 16 die Transparenz 1 zugeordnet wird.

Zusätzlich zu den Positionen der angezeigten Listeneinträge 16 werden Eingangspositionen am Start und am Ende als Ziel für die verschwundenen Listeneinträge definiert. Diese haben einen Transparentwert von 0 oder sie liegen außerhalb des sichtbaren Bereichs. Durch die Anordnung, Größe und Transparenz der Listeneinträge 16 wird ein perspektivischer Eindruck erreicht. Je nach gewünschtem Tiefeneindruck können die Anordnung, Größe (Skalierung) und Transparenz modifiziert werden. Dabei ist eine Berechnung anhand von dreidimensionalen Parametern nicht erforderlich, so dass die exakte Positionierung der Listeneinträge 16 nach gestalterischen Gesichtspunkten vereinfacht wird.

Die folgende Tabelle gibt die Lage des Mittelpunkts der Listeneinträge bzw. der Start- und Ende-Positionen sowie die Transparenz und die Größe bzw. Skalierung bei einem Beispiel an, bei dem vier Listeneinträge 16 im Anzeigebereich 9 angezeigt werden:

| | x | y | Transparenz | Skalierung |
|---|---|---|---|---|
| Start | 0,5 | 0,21 | 0 | 0,78 |
| Position 1 | 0,5 | 0,23 | 1 - 0,4 | 0,80 |
| Position 2 | 0,5 | 0,32 | 1 - 0,8 | 0,9 |
| Position 3 | 0,5 | 0,46 | 1 | 1 |
| Position 4 | 0,5 | 0,86 | 1 | 1,05 |
| Ende | 0,5 | 1,06 | 1 | 1,05 |

Der jeweils markierte Listeneintrag 16 wird in diesem Fall bei der Position 3 angezeigt.

Bei der Animation werden die Listeneinträge 16 zwischen den sechs in der Tabelle angegebenen Positionen bewegt.

Des Weiteren können im Anzeigebereich 9 nur drei Listeneinträge 16 angezeigt werden. Die Positionen der Listeneinträge 16, zwischen denen sie beim Bildlauf bewegt werden, sind in der folgenden Tabelle angegeben:

| | x | y | Transparenz | Skalierung |
|---|---|---|---|---|
| Start | 0,5 | 0,24 | 0 | 0,84 |
| Position 1 | 0,5 | 0,30 | 1 - 0,8 | 0,9 |
| Position 2 | 0,5 | 0,44 | 1 | 1 |
| Position 3 | 0,5 | 0,86 | 1 | 1,05 |
| Ende | 0,5 | 1,06 | 1 | 1,05 |

In diesem Fall wird der jeweils markierte Listeneintrag 16 bei der Position 2 angezeigt.

Während des Bildlaufs durch die erste Liste durch Betätigung der Druckpunkte 13 bzw. 14 der jeweiligen Tastschalter des Kreuzwippschalters 10, befindet sich immer ein Listeneintrag in der zweiten Position von unten, bei welcher nicht nur ein Hauptbegriff oben sichtbar ist, sondern auch unterhalb davon weitere Information, die gegebenenfalls farblich hervorgehoben dargestellt wird. Bei diesem Listeneintrag 16 handelt es sich um den jeweils markierten Listeneintrag 16. Wird für ein bestimmtes Zeitintervall kein Betätigungsvorgang mittels der Eingabevorrichtung 4 ausgeführt, wird bei der ersten Liste der markierte Listeneintrag 16 automatisch ausgewählt. Die Länge des Zeitintervalls ist in einem Bereich von 1000 ms bis 5000 ms, bevorzugt 1000 ms oder 5000 ms. Dies bedeutet, dass die Wiedergabe der Listeneinträge 16 im Anzeigebereich 9 verschwindet, und stattdessen der Anzeigeinhalt des ausgewählten Listeneintrags 16 im Anzeigebereich 9 wiedergegeben wird. Der Anzeigebereich 9 verkleinert sich jedoch wieder und es wird zusätzlich der Anzeigebereich 5 dargestellt. Ferner wird der Anzeigebereich 6 wieder vergrößert dargestellt. Wird beispielsweise ausgehend von der in Fig. 3 wiedergegebenen Anzeige die Eingabeeinrichtung 4 für ein bestimmtes Zeitintervall nicht betätigt, wechselt die Darstellung auf der Anzeigefläche 1 nach Ablauf des Zeitintervalls automatisch zu der in Fig. 4 wiedergegebenen Anzeige. Wie in Fig. 4 gezeigt, werden die Anzeigebereiche 5 und 6 wieder wie in Fig. 2 dargestellt. Im Anzeigebereich 9 wird hingegen der Anzeigeinhalt des ausgewählten Listeneintrags 16 wiedergegeben. Der Hauptbegriff für diesen Listeneintrag 16 "Geschwindigkeit" verschwindet in diesem Fall. Es wird nur noch die aktuelle Fahrzeuggeschwindigkeit "125 km/h" angezeigt. Außerdem verschwindet die farbliche Hervorhebung dieses Informationselements 26, die bei den Listeneinträgen 16 noch wiedergegeben wurde, entweder sofort oder nach Ablauf eines weiteren Zeitintervalls.

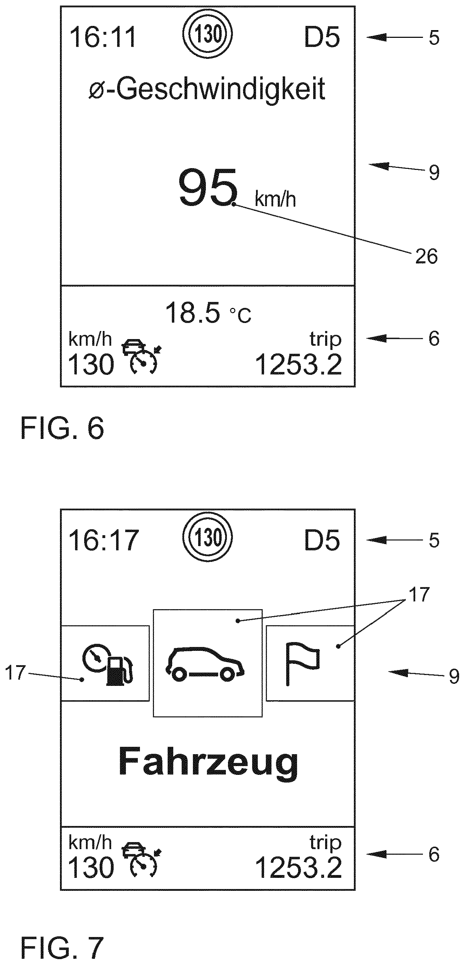

Wenn der Nutzer erneut den Druckpunkt 13 des Kreuzwippschalters 10 betätigt, wird erneut, wie in Fig. 5 gezeigt, die Liste mit den Listeneinträgen 16 wiedergegeben, wobei in der markierten Position der nächste Listeneintrag 16 mit der Durchschnittsgeschwindigkeit angezeigt wird. Wird innerhalb des Zeitintervalls die Eingabeeinrichtung 4 nicht betätigt, während der Listeneintrag 16 für die Durchschnittsgeschwindigkeit fortwährend in der markierten Position verweilt, wird dieser ausgewählt und es wird die in Fig. 6 dargestellte Anzeige wiedergegeben.

Wenn der Nutzer hingegen ausgehend von der beispielsweise in Fig. 2, Fig. 4 oder Fig. 6 wiedergegebenen Anzeige den Druckpunkt 11 bzw. 12 des Kreuzwippschalters 14 betätigt, wechselt die Anzeige zu dem Anzeigeinhalt eines Listeneintrags einer zweiten Liste, wie es im Folgenden erläutert wird:
Wird ein Druckpunkt 11 bzw. 12 des Kreuzwippschalters 10 während der Anzeige des Anzeigeinhalts, der einem Listeneintrag 16 der ersten Liste zugeordnet ist, betätigt, wechselt die Darstellung zunächst zu der Darstellung eines virtuellen, perspektivisch dargestellten Rings in dem Anzeigebereich 9, wie es in Fig. 7 gezeigt ist. Dieser virtuelle perspektivisch dargestellte Ring umfasst mehrere graphische Objekte 17, zumindest zweien dieser Objekte 17 sind Listen zugeordnet. Das Objekt 17 MFA (Multifunktionsanzeige) ist der ersten Liste zugeordnet. Des Weiteren umfasst der Ring folgende Objekte 17, denen jeweils auch eine Liste zugeordnet ist: Ein Objekt 17 betrifft das Fahrzeug selbst, insbesondere Zustandsinformationen zu dem Fahrzeug einschließlich Warnmeldungen; ein Objekt 17 betrifft das Navigationssystem des Fahrzeugs; ein Objekt 17 betrifft eine Telekommunikationseinrichtung des Fahrzeugs; ein Objekt 17 betrifft die Fahrerassistenzsysteme des Fahrzeugs; ein Objekt 17 betrifft das Radio des Fahrzeugs.

Von dem virtuellen Ring werden jeweils drei Objekte 17 angezeigt, von denen das mittlere Objekt 17 sich in der markierten Position befindet. Wenn der Nutzer den Druckpunkt 12 des Kreuzwippschalters 10 betätigt, werden die Objekte 17 entgegen dem Uhrzeigersinn um eine virtuelle senkrechte Achse um eine Position weiter gedreht, so dass das rechte Objekt 17 verschwindet, das mittlere Objekt 17 rechts dargestellt wird, das linke Objekt 17 in der Mitte dargestellt wird und als linkes Objekt 17 ein neues Objekt 17 angezeigt wird. Zu dem Objekt 17 welches sich in der markierten Position befindet, wird zusätzlich, farblich hervorgehoben, ein Schlagwort wiedergegeben. Bei dem in Fig. 7 gezeigten Fall wird als Schlagwort "Fahrzeug" angegeben. Auch in diesem Fall wird die Drehung der Objekte 17 auf dem virtuellen Ring als Animation dargestellt, bei welcher mehrere Zwischenbilder dargestellt werden. Die Animation, bei welcher ein Objekt 17 um eine Position weiter rückt, umfasst zu Beginn eine beschleunigte Bewegung des Objektes 17, welche zum Ende hin abgebremst wird.

Drückt der Nutzer aus den von der in Fig. 6 gezeigten Anzeige einmalig auf den Druckpunkt 11 bzw. 12 des Kreuzwippschalters 10, wechselt die Anzeige zu der Liste des Objekts 17, das benachbart zu dem Objekt der bisherigen Liste auf dem Ring angeordnet ist. Für den Darstellungswechsel wird die vorstehend beschriebenen Animation gezeigt, bei welcher die Objekte 17 auf dem Ring gedreht werden. Betätigt der Nutzer während dieser Animation nochmals den Druckpunkt 11 bzw. 12 des Kreuzwippschalters 10, führt dies dazu, dass der Ring um jeweils eine Position weiter gedreht wird. Durch mehrmalige Betätigung der Druckpunkte 11 bzw. 12 kann der Nutzer somit ein beliebiges Objekt 17 in die markierte Position bringen. Bei Betätigung des Druckpunkts 11 wird der Ring im entgegengesetzten Drehsinn, d. h. im Uhrzeigersinn, gedreht. Verbleibt ein Objekt 17 für ein bestimmtes Zeitintervall in der markierten Position, d. h. es wird während dieses Zeitintervalls die Eingabeeinrichtung 4 nicht betätigt, so wird dieses Objekt 17 automatisch ausgewählt. Die Länge des Zeitintervalls ist in einem Bereich von 1000 ms bis 5000 ms, bevorzugt 1000 ms oder 5000 ms.

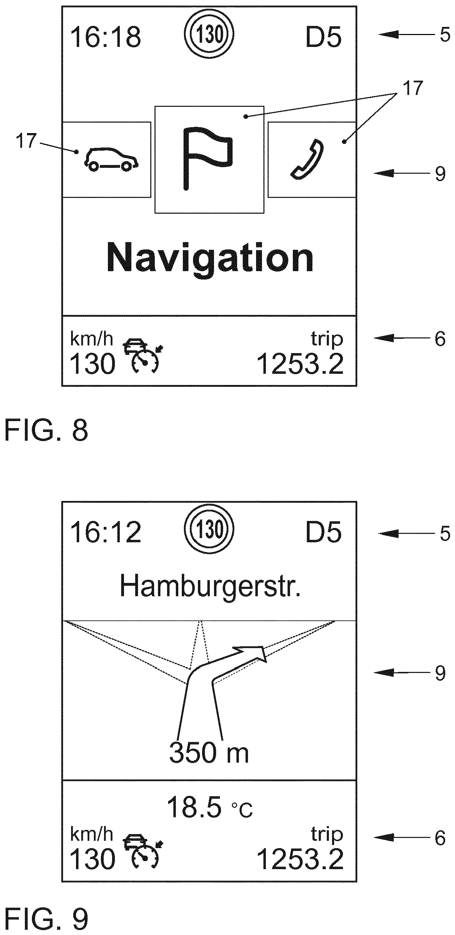

Dreht der Nutzer beispielsweise durch Betätigung des Druckpunktes 12 des Kreuzwippschalters 10 ausgehend von der in Fig. 7 dargestellten Anzeige zu der in Fig. 8 dargestellten Anzeige, bei welcher sich ein Objekt 17 für das Navigationssystem des Fahrzeugs in der markierten Position befindet, und verbleibt dieses Objekt 17 in dieser markierten Position für das vorgegebene Zeitintervall, wechselt die Anzeige nach Ablauf des Zeitintervalls in die in Fig. 9 wiedergegebene Anzeige auf der Anzeigefläche 1. In diesem Fall wird der Anzeigeinhalt eines Listeneintrags der Liste für das Navigationssystem im Anzeigebereich 9 angezeigt. Der Anzeigeinhalt umfasst den Namen der Straße, die aktuell von dem Fahrzeug befahren wird, und eine Graphik des Navigationssystems, welche dem Fahrer des Fahrzeugs Richtungshinweise für das Befahren einer vorgegebenen Route gibt.

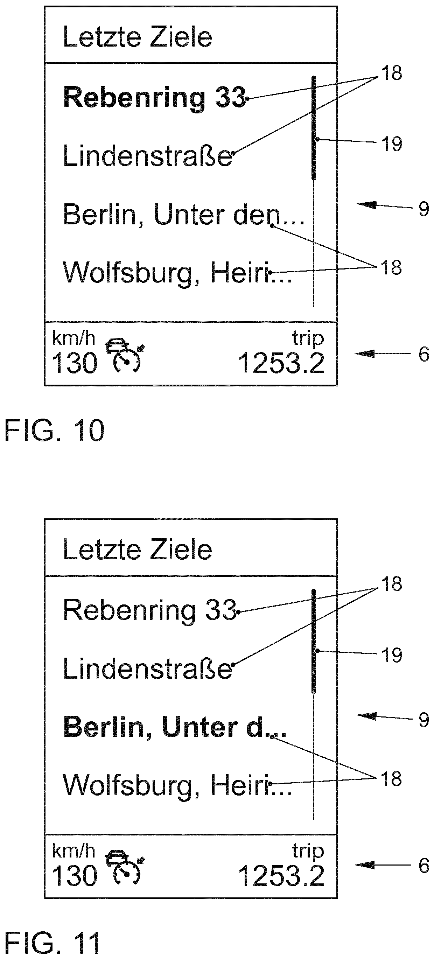

Ausgehend von der in Fig. 9 gezeigten Anzeige kann der Nutzer auch andere Ziele für das Navigationssystem auswählen. Hierfür ist dem Navigationssystem z. B. eine zweite Liste zugeordnet, welche als Listeneinträge die zuletzt angesteuerten Ziele umfasst. Wie bei der ersten Liste zu der Multifunktionsanzeige, kann der Nutzer zu dieser Liste gelangen, indem er den Druckpunkt 13 bzw. 14 des Kreuzwippschalters 10 betätigt. Betätigt der Nutzer beispielsweise den Druckpunkt 13, gelangt er zu der in Fig. 10 dargestellten Anzeige auf der Anzeigefläche 1. Wie bereits mit Bezug zu Fig. 3 bei der ersten Liste erläutert, verschwindet in diesem Fall der Anzeigebereich 5 und der Anzeigebereich 6 wird verkleinert dargestellt, so dass die Temperaturanzeige nicht mehr sichtbar ist. Der Anzeigebereich 9 für den aktuellen Kontext wird hingegen vergrößert und es wird eine Teilmenge der zweiten Liste für die letzten Ziele des Navigationssystems angezeigt. In dem in Fig. 10 gezeigten Fall werden insgesamt vier Listeneinträge 18 angezeigt, wobei ein Listeneintrag 18 markiert dargestellt ist. In dem in Fig. 10 gezeigten Fall ist der Listeneintrag "Rebenring 33" markiert angezeigt. Außerdem wird ein Bildlaufbalken 19 dargestellt, der es dem Nutzer erleichtert, sich innerhalb der zweiten Liste zu orientieren.

Die Darstellung der zweiten Liste für das Navigationssystem weist außerdem die Besonderheit auf, dass im Hintergrund weiterhin die Graphik angezeigt wird, welche dem Fahrer Hinweise zum Befahren der aktuellen Route gibt. Diese Graphik ermöglicht es dem Fahrer, weiterhin der aktuellen Route zu folgen, auch wenn beispielsweise der Beifahrer einen Bildlauf durch die letzten Ziele des Navigationssystems erzeugt.

Der Nutzer kann nun anhand der Druckpunkte 13 bzw. 14 des Kreuzwippschalters 10 durch die Listeneinträge 18 der zweiten Liste scrollen. Betätigt er beispielsweise mehrmals den Druckpunkt 14, verändert sich zunächst die angezeigte Teilmenge der zweiten Liste des Navigationssystems nicht. Der markierte Listeneintrag 18 wandert jedoch nach unten. Erst wenn der unterste Listeneintrag 18 markiert ist, verändert sich die angezeigte Teilmenge der Liste, wenn weiter nach unten gescrollt wird.

Die Art und Weise, wie ein Listeneintrag 18 der zweiten Liste ausgewählt wird, unterscheidet sich jedoch von der Weise, wie ein Listeneintrag 16 der ersten Liste ausgewählt wird. Bei der ersten Liste wurde ein Listeneintrag 16 automatisch nach Ablauf eines Zeitintervalls ausgewählt, sofern dieser während dieses Zeitintervalls in der markierten Position war. Bei den Listeneinträgen 18 der zweiten Liste ist es erforderlich, dass der Nutzer einen markierten Listeneintrag 18 durch eine Bestätigungseingabe auswählt. Diese Bestätigungseingabe wird bei dem vorliegenden Ausführungsbeispiel durch Drücken des Druckpunkts 15 des Kreuzwippschalters 10 durchgeführt. Erst wenn der Druckpunkt 15 gedrückt worden ist, wird das markierte Ziel für das Navigationssystem ausgewählt und die Anzeige wechselt wieder zurück zu der in Fig. 9 wiedergegebenen Anzeige, wobei jedoch im Anzeigebereich 9 das neue Ziel und die entsprechende Graphik für die Routenführung angezeigt wird.

Erfindungsgemäß gibt es somit zwei Arten von Listen: bei der ersten Liste wird ein markierter Listeneintrag automatisch nach Ablauf eines Zeitintervalls, in welchem der Listeneintrag fortwährend markiert war, ausgewählt; bei der zweiten Liste wird ein markierter Listeneintrag durch eine Bestätigungseingabe ausgewählt.

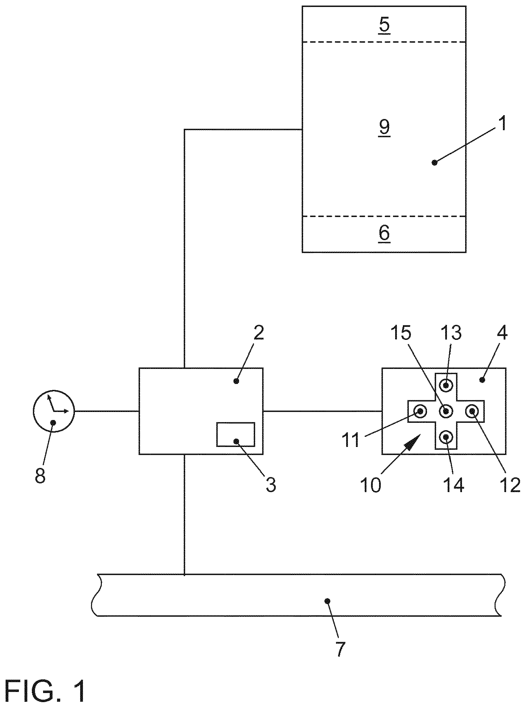

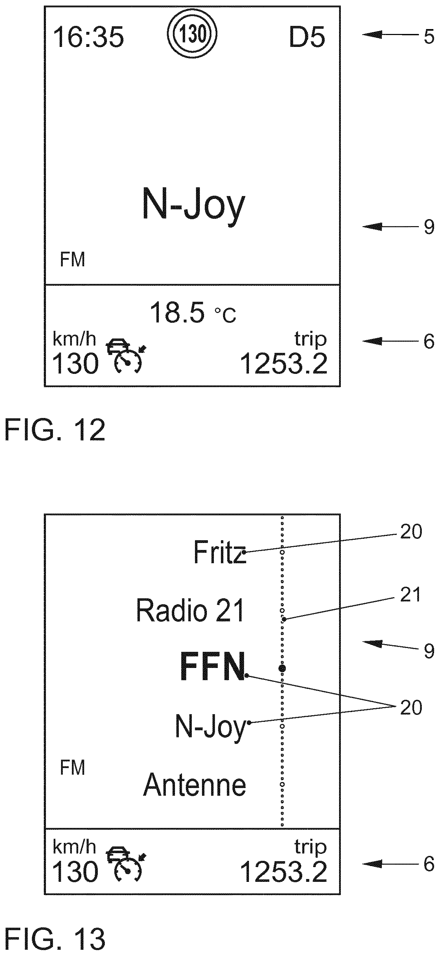

Wie bereits mit Bezug zu den Fig. 1 bis 6 erläutert, gelangt der Nutzer ausgehend von der in Fig. 9 wiedergegebenen Anzeige zu der Darstellung des virtuellen Rings mit den Objekten 17 durch Betätigung des Druckpunktes 11 bzw. 12 des Kreuzwippschalters 11. Durch mehrmalige Betätigung des Druckpunkts 11 bzw. 12 kann der Nutzer als Objekt 17 beispielsweise das Radio des Fahrzeugs auswählen. In diesem Fall gelangt man zu der in Fig. 12 gezeigten Anzeige auf der Anzeigefläche 1. Im Anzeigebereich 9 wird der aktuelle Radiosender angezeigt. Betätigt der Nutzer ausgehend von dieser Anzeige einen der Druckpunkte 13 oder 14, gelangt er zu einer weiteren Liste, die dem Radio des Fahrzeugs zugeordnet ist. Die Darstellung dieser Liste ist in Fig. 13 wiedergegeben. Erneut verschwindet der Anzeigebereich 5. Der Anzeigebereich 6 verkleinert sich und im Anzeigebereich 9 wird eine Teilmenge der Listeneinträge 20 der Liste der Radiosender, die vom Fahrzeug empfangbar sind, angezeigt. Neben den Listeneinträgen 20 für die Radiosender wird schematisch noch eine Skala 21 dargestellt.

Durch Betätigung der Druckpunkte 13 bzw. 14 des Kreuzwippschalters 10 kann der Nutzer einen Bildlauf erzeugen und einen beliebigen Listeneintrag 20 markieren. Die Art der Darstellung der Listeneinträge 20 unterscheidet sich jedoch von der Art der Darstellung der Listeneinträge 18. Ist beispielsweise bei der Anzeige gemäß Fig. 10 der oberste Listeneintrag 18 markiert und betätigt der Nutzer den Druckpunkt 14, um in der Liste nach unten zu gelangen, wird der zweite Listeneintrag 18 von oben markiert, die dargestellte Teilmenge der Liste verändert sich jedoch nicht. Bei der Liste für die Radiosender ist immer der mittlere Listeneintrag 20, d. h. bei dem in Fig. 13 wiedergegebenen Fall der Radiosender FFN, markiert. Betätigt der Nutzer in diesem Fall den Druckpunkt 14 des Kreuzwippschalters 10, wird der nächste Listeneintrag 20, d. h. bei dem in Fig. 13 gezeigten Fall der Radiosender N-Joy, markiert. Dieser Listeneintrag 20 wandert jedoch in die mittlere Stellung, der oberste Listeneintrag 20 verschwindet und unten wird ein neuer Listeneintrag 20 angezeigt. Es verändert sich somit die angezeigte Teilmenge der Liste für die Radiosender.

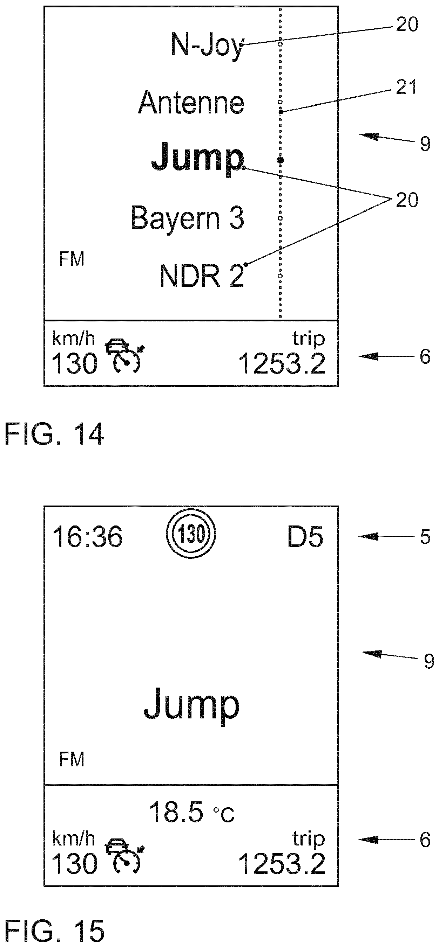

Durch Betätigung des Druckpunkts 14 kann der Nutzer beispielsweise in der Liste der Radiosender einen Bildlauf erzeugen, bis sich der Listeneintrag 20 mit dem Radiosender "Jump" in der mittleren, markierten Position befindet, wie in Fig. 14 dargestellt. Verbleibt dieser Listeneintrag 20 in der mittleren, markierten Position für ein bestimmtes Zeitintervall, wird - wie bei der ersten Liste - nach Ablauf dieses Zeitintervalls dieser Listeneintrag 20 automatisch ausgewählt und die Anzeige wechselt zu der in Fig. 15 wiedergegebenen Anzeige. Das Zeitintervall, das für die automatische Auswahl eines Listeneintrags erforderlich ist, kann insbesondere dasselbe sein, wie bei der ersten Liste für die Multifunktionsanzeige oder etwaiger weiterer Listen, bei denen die Auswahl eines Listeneintrags automatisch, d. h. ohne Betätigungsvorgang des Nutzers, erfolgt.

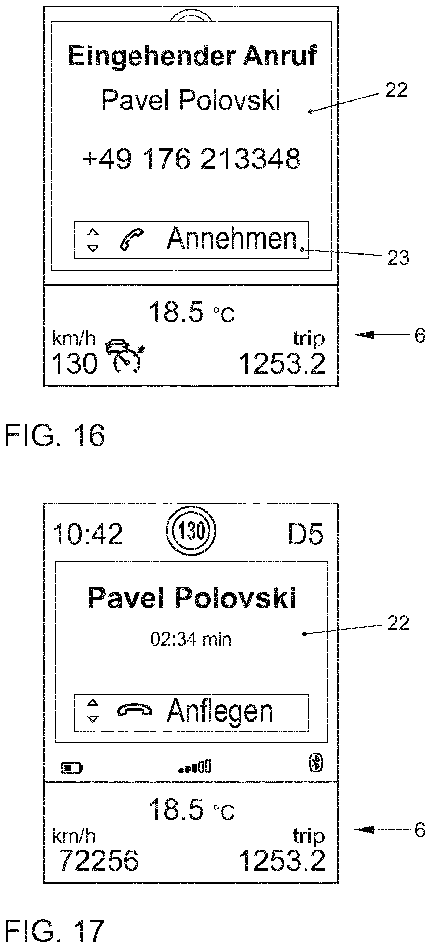

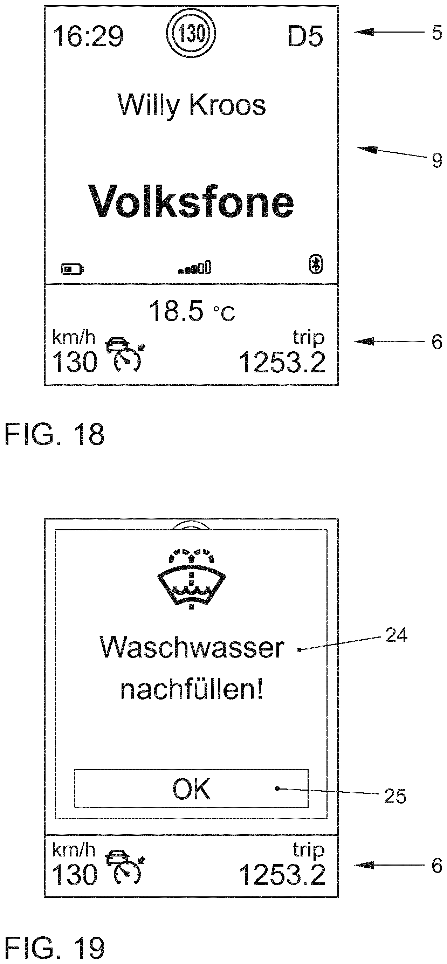

In Fig. 16 ist der Fall gezeigt, bei welcher die Telekommunikationseinrichtung des Fahrzeugs einen eingehenden Anruf erfasst. Unabhängig von der aktuellen Anzeige auf der Anzeigefläche 1, werden zunächst eventuell aktive Bedienelemente, die in Form von Schaltflächen auf der Anzeigefläche 1 angezeigt werden, geschlossen bzw. beendet. Ist beispielsweise aktuell eine Liste aufgerufen, deren Listenelemente angezeigt werden, wird die Listenanzeige zunächst geschlossen und beispielsweise zu dem zuletzt ausgewählten Listeneintrag zurückgekehrt. Danach wird, wie in Fig. 16 gezeigt, ein Fenster 22 geöffnet, welches der aktuellen Anzeige überlagert ist und welches auf den eingehenden Anruf hinweist (Popup-Darstellung). Das Fenster 22 wird so dargestellt, dass der Anzeigebereich 6 weiterhin sichtbar ist, die Anzeigebereiche 5 und 9 gegebenenfalls jedoch nur noch teilweise sichtbar sind oder als Hintergrund sichtbar sind. Der Nutzer kann nun die Schaltfläche 23 "Annehmen" durch eine Bestätigungseingabe, d. h. durch Drücken des Druckpunktes 15 des Kreuzwippschalters 10, betätigen und hierdurch den Anruf annehmen. Die Steuervorrichtung 2 überträgt daraufhin über den Fahrzeugbus 7 ein entsprechendes Signal an die Telekommunikationseinrichtung des Fahrzeugs und verändert die Anzeige auf der Anzeigefläche 1 so, dass die in Fig. 17 wiedergegebene Anzeige dargestellt wird. Ausgehend von dieser Anzeige kann der Nutzer den Anruf durch erneutes Betätigen des Druckpunktes 15 des Kreuzwippschalters 10 beenden, woraufhin die in Fig. 18 wiedergegebene Anzeige auf der Anzeigefläche 1 dargestellt wird. Es wird in diesem Fall ein Listeneintrag der Telefonliste angezeigt.

Auf die gleiche Weise wie auf einen eingehenden Telefonanruf mittels des Popupfensters 22 können dem Nutzer auch verschiedene Warnungen signalisiert werden. Eine solche Warnmeldung ist beispielsweise in Fig. 19 gezeigt. Unabhängig vom aktuellen Kontext wird ein Fenster 24 im Vordergrund dargestellt, welches auf das Nachfüllen des Waschwassers hinweist. Das Fenster 24 wird so angezeigt, dass die Anzeigebereiche 5 und 9 überhaupt nicht mehr sichtbar oder nur noch im Hintergrund sichtbar sind. Vom Anzeigebereich 6 ist nur noch der untere Bereich sichtbar. Gleichzeitig wird in dem Fenster 24 eine Schaltfläche 25 angezeigt. Bei Betätigung des Druckpunktes 15 bestätigt der Nutzer, dass er die Warnung wahrgenommen hat und das Fenster 24 wird wieder geschlossen.

Schließlich wird darauf hingewiesen, dass bei allen Animationen dieses Ausführungsbeispiels zunächst eine beschleunigte Bewegung und zum Ende hin eine abgebremste Bewegung dargestellt wird. Die Animationen können in der Regel durch Nutzeraktionen wie z. B. Eingaben über die Eingabeeinrichtung 4 abgebrochen werden. Es werden während der Animation somit keine Eingaben ignoriert. Einzige Ausnahme in dem vorliegenden Ausführungsbeispiel ist ein Kontextwechsel bei Betätigung des Druckpunktes 11 bzw. 12 des Kreuzwippschalters 10 und ein Bildlauf um eine Listenposition bei der Anzeige der Listeneinträge 20 für die Radiosender.

### Bezugszeichenliste

- 1: Anzeigefläche
- 2: Steuervorrichtung
- 3: Recheneinheit
- 4: Eingabeeinrichtung
- 5: Anzeigebereich
- 6: Anzeigebereich
- 7: Fahrzeugbus
- 8: Systemuhr
- 9: Anzeigebereich
- 10: Kreuzwippschalter
- 11-15: Druckpunkte des Kreuzwippschalters 10
- 16: Listeneintrag
- 17: graphisches Objekt
- 18: Listeneintrag
- 19: Bildlaufbalken
- 20: Listeneintrag
- 21: Skala
- 22: Fenster
- 23: Schaltfläche
- 24: Fenster
- 25: Schaltfläche

## Patentansprüche

1. Verfahren zum Bereitstellen einer Bedienvorrichtung, bei dem
- mittels einer Betätigung einer Eingabeeinrichtung (4) eine Informationsanzeige auf eine Anzeigefläche (1) gesteuert wird, wobei die anzeigbaren Informationen zumindest zwei Listen mit jeweils mehreren Listeneinträgen (16, 18) umfassen, wobei
- durch einen ersten Betätigungsvorgang während der Anzeige des Anzeigeinhalts, der einem ausgewählten Listeneintrag (16) der ersten Liste zugeordnet ist, zumindest eine Teilmenge der ersten Liste angezeigt wird,
**dadurch gekennzeichnet, dass**
- durch einen zweiten Betätigungsvorgang, welcher ein einmaliges Betätigen der Eingabeeinrichtung (4) ist, während der Anzeige des Anzeigeinhalts, der einem ausgewählten Listeneintrag (16) der ersten Listen zugeordnet ist, zu einer Anzeige eines Anzeigeinhalts, der einem Listeneintrag (18) der zweiten Liste zugeordnet ist, gewechselt wird, wobei
- es zwei Listenarten gibt, wobei
- bei Listen der ersten Listenart ein markierter Listeneintrag automatisch nach Ablauf eines Zeitintervalls, in welchem der Listeneintrag fortwährend markiert war, ausgewählt wird und
- bei Listen der zweiten Listenart ein markierter Listeneintrag durch eine Bestätigungseingabe ausgewählt wird, wobei
- die erste Liste eine Liste der ersten Listenart ist und die zweite Liste eine Liste der zweiten Listenart ist, wobei
- die Anzeigefläche (1) einen ersten (5) und einen zweiten Anzeigebereich (6) aufweist, in denen Statusinformationen angezeigt werden, und
- bei der Anzeige der Teilmenge der ersten Liste der zweite Anzeigebereich (6) kleiner dargestellt wird.

2. Verfahren nach einem der vorhergehenden Ansprüche, wobei durch den zweiten Betätigungsvorgang während der Anzeige des Anzeigeinhalts, der einem ausgewählten Listeneintrag (16) der ersten Liste zugeordnet ist, zunächst zu einer Darstellung eines ersten graphischen Objekts (17), welches der ersten Liste zugeordnet ist, auf einem virtuellen, perspektivisch dargestellten Ring mit mehreren Objekten (17) gewechselt wird, danach der Ring gedreht wird, bis ein zweites graphisches Objekt (17), das der zweiten Liste zugeordnet ist, im Vordergrund angezeigt wird und schließlich zu der Anzeige des Anzeigeinhalts gewechselt wird, der dem Listeneintrag (18) der zweiten Liste zugeordnet ist.

3. Verfahren nach Anspruch 2, wobei durch nochmaliges Ausführen des zweiten Betätigungsvorgangs, während die Objekte auf dem Ring gedreht werden, der Ring um jeweils eine Position weiter gedreht wird.

4. Verfahren nach einem der vorhergehenden Ansprüche, wobei durch mehrmaliges Ausführen des ersten Betätigungsvorgangs ein Listeneintrag (16) der ersten Liste markiert und/oder ausgewählt wird.

5. Verfahren nach Anspruch 2 oder 3, wobei durch den zweiten Betätigungsvorgang festgelegt wird, in welchem Drehsinn der Ring gedreht wird.

6. Verfahren nach Anspruch 2, 3 oder 5, wobei der Ring mehrere Objekte (17) enthält und durch mehrmaliges Ausführen des zweiten Betätigungsvorgangs eines der Objekte (17) des Rings ausgewählt wird.

7. Verfahren nach Anspruch 2, 3, 5 oder 6, wobei der Ring perspektivisch um eine vertikale Achse gedreht wird.

8. Bedienvorrichtung mit:
- einer Anzeigefläche (1) zur Anzeige von Informationen, wobei die anzeigbaren Informationen zumindest zwei Listen mit mehreren Listeneinträgen (16, 18) umfassen,
- einer Steuervorrichtung (2) zum Erzeugen von Graphikdaten auf der Anzeigefläche (1) und
- einer Eingabeeinrichtung (4) zum Steuern der Informationsanzeige auf der Anzeigefläche (1),
- wobei auf einen zweiten mittels der Eingabeeinrichtung (4) ausführbaren Betätigungsvorgang, welcher ein einmaliges Betätigen der Eingabeeinrichtung (4) ist, während der Anzeige des Anzeigeinhalts, der einem ausgewählten Listeneintrag (16) der ersten Liste zugeordnet ist, die Steuervorrichtung (2) eingerichtet ist, die Anzeigefläche (1) so anzusteuern, dass zu einer Anzeige des Anzeigeinhalts, der einem Listeneintrag (18) der zweiten Liste zugeordnet ist, gewechselt wird,
**dadurch gekennzeichnet, dass**
- auf einen ersten mittels der Eingabeeinrichtung (4) ausführbaren Betätigungsvorgang während der Anzeige eines Anzeigeinhalts, der einem ausgewählten Listeneintrag (16) der ersten Liste zugeordnet ist, die Steuervorrichtung (2) eingerichtet ist, die Anzeigefläche (1) so anzusteuern, dass zumindest eine Teilmenge der ersten Liste angezeigt wird, wobei
- es zwei Listenarten gibt, wobei eine erste Liste eine Liste der ersten Listenart ist und eine zweite Liste eine Liste der zweiten Listenart ist, wobei
- die Steuervorrichtung (2) dazu eingerichtet ist, dass bei der Liste der ersten Listenart ein markierter Listeneintrag automatisch nach Ablauf eines Zeitintervalls, in welchem der Listeneintrag fortwährend markiert war, ausgewählt wird und
- bei der Liste der zweiten Listenart ein markierter Listeneintrag durch eine Bestätigungseingabe ausgewählt wird, wobei
- die Anzeigefläche (1) einen ersten (5) und einen zweiten Anzeigebereich (6) aufweist und die Steuervorrichtung (2) eingerichtet ist, die Anzeigefläche (1) so anzusteuern, dass in dem ersten (5) und zweiten Anzeigebereich (6) Statusinformationen angezeigt werden, und
- bei der Anzeige der Teilmenge der ersten Liste der zweite Anzeigebereich (6) kleiner dargestellt wird.

9. Bedienvorrichtung nach Anspruch 8, wobei auf den zweiten mittels der Eingabeeinrichtung (4) ausführbaren Betätigungsvorgang während der Anzeige des Anzeigeinhalts, der dem ausgewählten Listeneintrag (16) der ersten Liste zugeordnet ist, die Steuervorrichtung (2) eingerichtet ist, die Anzeigefläche (1) so anzusteuern, dass zunächst zu einer Darstellung eines ersten graphischen Objekts (17), welches der ersten Liste zugeordnet ist, auf einem virtuellen, perspektivisch dargestellten Ring mit mehreren Objekten (17) gewechselt wird, danach der Ring gedreht wird, bis ein zweites graphisches Objekt (17), das der zweiten Listen zugeordnet ist, im Vordergrund angezeigt wird und schließlich zu der Anzeige des Anzeigeinhalts gewechselt wird, der dem Listeneintrag (18) der zweiten Liste zugeordnet ist.

10. Bedienvorrichtung nach Anspruch 8 oder 9, wobei die Eingabeeinrichtung (4) von der Anzeigefläche (1) abgesetzt angeordnet ist.

11. Bedienvorrichtung nach einem der Ansprüche 8 bis 10, wobei die Eingabevorrichtung (4) für den ersten und den zweiten Betätigungsvorgang einen Kreuzwippschalter (10) aufweist.

12. Bedienvorrichtung nach einem der Ansprüche 8 bis 11, wobei die Eingabevorrichtung (4) für den ersten Betätigungsvorgang zumindest einen ersten Tastschalter und/oder für den zweiten Betätigungsvorgang zumindest einen zweiten Tastschalter aufweist.

13. Fahrzeug mit einer Bedienvorrichtung nach einem der Ansprüche 8 bis 12, wobei die Eingabeeinrichtung (4) am Lenkrad des Fahrzeugs angeordnet ist oder von einer am Lenkrad befindlichen Hand eines Nutzers aus bedienbar ist.

## Claims

1. A method for providing an operator control apparatus, in which
- by means of an actuation of an input device (4) an information display is controlled on a display surface (1), wherein the displayable information comprises at least two lists with in each case several list entries (16, 18), wherein
- through a first actuation operation during the display of the display content, which is associated with a selected list entry (16) of the first list, at least one subset of the first list is displayed.
**characterized in that**
- through a second actuation operation, which is a one-time actuating of the input device (4), during the display of the display content, which is associated with a selected list entry (16) of the first list, a change is made to a display of a display content, which is associated with a list entry (18) of the second list, wherein
- there are two types of lists, wherein
- in the case of lists of the first type of list a marked list entry is automatically selected after a time interval, in which the list entry was constantly marked, and
- in the case of lists of the second type of list a marked list entry is selected by an actuation input, wherein
- the first list is a list of the first type of list and the second list is a list of the second type of list, wherein
- the display surface (1) has a first (5) and a second display area (6), in which status information is displayed, and
- in the display of the subset of the first list the second display area (6) is displayed smaller.

2. The method according to any one of the preceding claims, wherein through the second actuation operation during the display of the display content, which is associated with a selected list entry (16) of the first list, first a change is made to a representation of a first graphic object (17), which is associated with the first list, on a virtual ring shown in perspective with several objects (17), thereafter the ring is rotated until a second graphic object (17), which is associated with the second list, is displayed in the foreground and finally a change is made to the display of the display content, which is associated with the list entry (18) of the second list.

3. The method according to Claim 2,
wherein
by carrying out the second actuation operation again, while the objects are rotated on the ring, the ring is further rotated in each case around one position.

4. The method according to any one of the preceding claims,
wherein
by repeatedly carrying out the first actuation operation a list entry (16) of the first list is marked and/or selected.

5. The method according to Claim 2 or 3,
wherein
it is determined by the second actuation operation in which direction of rotation the ring is rotated.

6. The method according to Claim 2, 3 or 5,
wherein
the ring contains several objects (17) and by repeatedly carrying out the second actuation operation one of the objects (17) of the ring is selected.

7. The method according to Claim 2, 3, 5 or 6,
wherein
the ring is rotated in perspective about a vertical axis.

8. An operator control apparatus having:
- a display surface (1) for the display of information, wherein the displayable information comprises at least two lists with several list entries (16, 18),
- a control device (2) for generating graphic data on the display surface (1) and
- an input device (4) for the control of the information display on the display surface (1),
- wherein upon the second actuation operation that is carried out by means of the input device (4), which is a one-time actuation of the input device (4), during the display of the display content, which is associated with a selected list entry (16) of the first list, the control device (2) is configured to control the display surface (1) such that a change is made to a display of the display content, which is associated with a list entry (18) of the second list,
**characterized in that**
- upon a first actuation operation that can be carried out by means of the input device (4) during the display of a display content, which is associated with a selected list entry (16) of the first list, the control device (2) is configured to control the display surface (1) such that at least one subset of the first list is displayed, wherein
- there are two types of lists, wherein a first list is a list of the first type of list and a second list is a list of the second type of list, wherein
- the control device (2) is configured so that in the case of the list of the first type of list a marked list entry is automatically selected after a time interval, in which the list entry was constantly marked, and
- in the case of the list of the second type of list a marked list entry is selected by an actuation input, wherein
- the display surface (1) has a first (5) and a second display area (6), and the control device (2) is configured to control the display surface (1) such that status information is displayed in the first (5) and the second display area (6), and
- in the display of the subset of the first list the second display area (6) is displayed smaller.

9. The operator control apparatus according to Claim 8,
wherein
upon the second actuation operation that can be carried out by means of the input device (4) during the display of the display content, which is associated with the selected list entry (16) of the first list, the control device (2) is configured to control the display surface (1) such that first a change is made to a representation of a first graphic object (17), which is associated with the first list, on a virtual ring shown in perspective with several objects (17), thereafter the ring is rotated until a second graphic object (17), which is associated with the second list, is displayed in the foreground and finally a change is made to the display of the display content, which is associated with the list entry (18) of the second list.

10. The operator control apparatus according to Claim 8 or 9,
wherein
the input device (4) is arranged offset from the display surface (1).

11. The operator control apparatus according to any one of Claims 8 to 10,
wherein
the input device (4) for the first and the second actuation operation has a cross-rocker switch (10).

12. The operator control apparatus according to any one of Claims 8 to 11,
wherein
the input device (4) for the first actuation operation has at least one first push-button switch and/or for the second actuation operation at least one second push-button switch.

13. A vehicle with an operator control apparatus according to any one of Claims 8 to 12,
wherein
the input device (4) is arranged on the steering wheel of the vehicle or can be operated from a hand of the user on the steering wheel.

## Revendications

1. Procédé de fourniture d'un dispositif de manoeuvre, dans lequel
- un affichage d'informations sur une surface d'affichage (1) est commandé au moyen d'un actionnement d'un système d'entrée (4), dans lequel les informations affichables comprennent au moins deux listes avec respectivement plusieurs inscriptions de liste (16, 18), dans lequel
- au moins une quantité partielle de la première liste est affichée par un premier processus d'actionnement pendant l'affichage du contenu d'affichage qui est affecté à une inscription de liste (16) sélectionnée de la première liste,
**caractérisé en ce que**
- par un deuxième processus d'actionnement qui est un actionnement unique du système d'entrée (4), pendant l'affichage du contenu d'affichage qui est affecté à une inscription de liste (16) sélectionnée des premières listes, il y a passage à un affichage d'un contenu d'affichage qui est affecté à une inscription de liste (18) de la deuxième liste, dans lequel
- il y a deux types de listes, dans lequel,
- dans le cas des listes du premier type de listes, une inscription de liste repérée est sélectionnée automatiquement à l'expiration d'un intervalle de temps pendant lequel l'inscription de liste était repérée de façon continue et
- dans le cas de listes du deuxième type de listes, une inscription de liste repérée est sélectionnée par une entrée de confirmation, dans lequel
- la première liste est une liste du premier type de listes et la deuxième liste est une liste du deuxième type de listes, dans lequel
- la surface d'affichage (1) comporte une première (5) et une deuxième zone d'affichage (6) dans lesquelles des informations de statut sont affichées, et
- dans le cas de l'affichage de la quantité partielle de la première liste, la deuxième zone d'affichage (6) est représentée de façon plus petite.

2. Procédé selon l'une des revendications précédentes, dans lequel,
sous l'action du deuxième processus d'actionnement pendant l'affichage du contenu d'affichage qui est affecté à une inscription de liste (16) sélectionnée de la première liste, il y a d'abord passage à une représentation d'un premier objet graphique (17) qui est affecté à la première liste sur un anneau virtuel représenté en perspective avec plusieurs objets (17), puis l'anneau est tourné jusqu'à ce qu'un deuxième objet graphique (17) qui est affecté à la deuxième liste soit affiché au premier plan et enfin il y a passage à l'affichage du contenu d'affichage qui est affecté à l'inscription de liste (18) de la deuxième liste.

3. Procédé selon la revendication 2,
dans lequel
l'anneau est tourné de respectivement encore une position par une nouvelle exécution du deuxième processus d'actionnement pendant que les objets sur l'anneau sont tournés.

4. Procédé selon l'une des revendications précédentes,
dans lequel
une inscription de liste (16) de la première liste est repérée et/ou sélectionnée par une exécution à plusieurs reprises du premier processus d'actionnement.

5. Procédé selon la revendication 2 ou 3,
dans lequel
il est déterminé par le deuxième processus d'actionnement dans quel sens de rotation l'anneau est tourné.

6. Procédé selon la revendication 2, 3 ou 5,
dans lequel
l'anneau contient plusieurs objets (17), et un des objets (17) de l'anneau est sélectionné par une exécution à plusieurs reprises du deuxième processus d'actionnement.

7. Procédé selon la revendication 2,3, 5 ou 6,
dans lequel
l'anneau est tourné en perspective autour d'un axe vertical.

8. Dispositif de manoeuvre, avec :
- une surface d'affichage (1) pour l'affichage d'informations, dans lequel les informations affichables comprennent au moins deux listes avec plusieurs inscriptions de liste (16, 18),
- un dispositif de commande (2) pour la production de données graphiques sur la surface d'affichage (1) et
- un système d'entrée (4) pour la commande de l'affichage d'informations sur la surface d'affichage (1),
- dans lequel, suite à un deuxième processus d'actionnement, exécutable au moyen du système d'entrée (4), qui est un actionnement unique du système d'entrée (4), pendant l'affichage du contenu d'affichage qui est affecté à une inscription de liste (16) sélectionnée de la première liste, le dispositif de commande (2) est agencé pour piloter la surface d'affichage (1) de telle sorte qu'il y a passage à un affichage du contenu d'affichage qui est affecté à une inscription de liste (18) de la deuxième liste,
**caractérisé en ce que**
- suite à un premier processus d'actionnement exécutable au moyen du système d'entrée (4) pendant l'affichage d'un contenu d'affichage qui est affecté à une inscription de liste (16) sélectionnée de la première liste, le dispositif de commande (2) est agencé pour piloter la surface d'affichage (1) de telle sorte qu'au moins une quantité partielle de la première liste est affichée, dans lequel
- il y a deux types de listes, dans lequel une première liste est une liste du premier type de listes, et une deuxième liste est une liste du deuxième type de listes, dans lequel
- le dispositif de commande (2) est agencé pour que, dans le cas de la liste du premier type de listes, une inscription de liste repérée soit sélectionnée automatiquement à l'expiration d'un intervalle de temps pendant lequel l'inscription de liste était repérée de façon continue et
- dans le cas de la liste du deuxième type de listes, une inscription de liste repérée est sélectionnée par une entrée d'actionnement, dans lequel
- la surface d'affichage (1) comporte une première (5) et une deuxième zone d'affichage (6), et le dispositif de commande (2) est agencé pour piloter la surface d'affichage (1) de telle sorte que des informations de statut sont affichées dans la première (5) et la deuxième zone d'affichage (6), et
- dans le cas de l'affichage de la quantité partielle de la première liste, la deuxième zone d'affichage (6) est représentée de façon plus petite.

9. Dispositif de manoeuvre selon la revendication 8,
dans lequel
à la suite du deuxième processus d'actionnement exécutable au moyen du système d'entrée (4) pendant l'affichage du contenu d'affichage qui est affecté à l'inscription de liste (16) sélectionnée de la première liste, le dispositif de commande (2) est agencé pour piloter la surface d'affichage (1) de telle sorte que il y a d'abord passage à une représentation d'un premier objet graphique (17) qui est affecté à la première liste sur un anneau virtuel représenté en perspective avec plusieurs objets (17), puis l'anneau est tourné jusqu'à ce qu'un deuxième objet graphique (17) qui est affecté à la deuxième liste soit affiché au premier plan, et enfin il y a passage à l'affichage du contenu d'affichage qui est affecté à l'inscription de liste (18) de la deuxième liste.

10. Dispositif de manoeuvre selon la revendication 8 ou 9,
dans lequel
le système d'entrée (4) est disposé de façon décalée par rapport à la surface d'affichage (1).

11. Dispositif de manoeuvre selon l'une des revendications 8 à 10,
dans lequel
le système d'entrée (4) comporte un commutateur à bascule en croix (10) pour le premier et le deuxième processus d'actionnement.

12. Dispositif de manoeuvre selon l'une des revendications 8 à 11,
dans lequel
le système d'entrée (4) comporte au moins un premier commutateur à touche pour le premier processus d'actionnement et/ou au moins un deuxième commutateur à touche pour le deuxième processus d'actionnement.

13. Véhicule avec un dispositif de manoeuvre selon l'une des revendications 8 à 12,
dans lequel
le système d'entrée (4) est disposé sur le volant de direction du véhicule ou peut être manoeuvré par une main d'un utilisateur située sur le volant de direction.
